(19) Europäisches Patentamt
European Patent Office
Office européen des brevets

(11) EP 0 496 120 B1

(12) # EUROPÄISCHE PATENTSCHRIFT

(45) Veröffentlichungstag und Bekanntmachung des Hinweises auf die Patenterteilung:
**28.02.1996 Patentblatt 1996/09**

(21) Anmeldenummer: **91122351.9**

(22) Anmeldetag: **28.12.1991**

(51) Int Cl.$^{6}$: **C08L 71/12**, C08L 25/02, C08K 5/00
// (C08K5/00, 5:3492, 5:43, 5:49)

(54) **Selbstverlöschende, halogenfrei flammgeschützte Formmasse mit verbessertem Brandwiderstandsverhalten**

Self-extinguishing, halogen-free flame retardant moulding composition with improved fire resistance

Masse à mouler auto-ignifugeante exempte d'halogène retardatrice de flamme ayant une résistance au feu améliorée

(84) Benannte Vertragsstaaten:
**BE DE ES FR GB IT NL**

(30) Priorität: **23.01.1991 DE 4101804**

(43) Veröffentlichungstag der Anmeldung:
**29.07.1992 Patentblatt 1992/31**

(73) Patentinhaber: **BASF Aktiengesellschaft**
**D-67063 Ludwigshafen (DE)**

(72) Erfinder:
- **Seelert, Stefan, Dr.**
  **W-6710 Frankenthal (DE)**
- **Klaerner , Peter, Dr.**
  **W-6719 Battenberg (DE)**
- **Vestner, Siegfried, Dr.**
  **W-6700 Ludwigshafen (DE)**
- **Ostermayer, Bertram, Dr.**
  **W-6900 Heidelberg (DE)**
- **Zeltner, Doris, Dr.**
  **W-6725 Roemerberg (DE)**
- **Weiss, Robert, Dr.**
  **W-6700 Ludwigshafen (DE)**

(56) Entgegenhaltungen:
**EP-A- 0 311 909**
**FR-A- 2 212 382**
**FR-A- 2 337 179**

- **WORLD PATENTS INDEX LATEST Derwent Publications Ltd., London, GB; AN 86-033384**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 496 120 B1

Printed by Jouve, 75001 PARIS (FR)

## Beschreibung

Die Erfindung betrifft flammgeschützte thermoplastische Formmassen, enthaltend

A) 5-94 Gew.-% eines Polyphenylenethers mit einem mittleren Molekulargewicht $M_w$ (Gewichtsmittel) von 10000 bis 35000,

B) 5-94 Gew.-% eines vinylaromatischen Polymeren,

C) 1-30 Gew.-% eines Flammschutzmittels, aufgebaut aus

C1) 70-95,9 Gew.-% mindestens einer phosphorhaltigen Verbindung,

C2) 4-29,9 Gew.-% eines Triazinderivates und

C3) 0,1-10 Gew.-% eines aromatischen Sulfonamids,
wobei sich die Gewichtsangaben auf den Gesamtgehalt der Komponente C) beziehen, sowie

D) 0-60 Gew.-% sonstiger Zusatzstoffe in wirksamen Mengen.

Weiterhin betrifft die Erfindung die Verwendung derartiger Formmassen zur Herstellung von Fasern, Folien und Formkörpern sowie die aus den erfindungsgemäßen Formmassen erhältlichen Formkörper.

Aufgrund der korrosiv wirkenden Verbrennungsgase beim Einsatz von halogenhaltigen Substanzen sind halogenfreie selbstverlöschende Formmassen erstrebenswert. Es ist bekannt, daß thermoplastische Formmassen, bestehend aus Styrolpolymerisaten und Polyphenylenethern (PPE), unter Verwendung von organischen Phosphorverbindungen flammfest ausgerüstet werden können. So wird z.B. in der in der DE-OS 2 546 621 die Verwendung von Triarylphosphaten, wie Triphenylphosphat, beschrieben. Die US-PS 4 278 588 beschreibt den Einsatz von Phosphinoxiden, wie Triphenylphosphinoxid, für die Flammfestausrüstung von Polymermischungen aus Polyphenylenethern und Styrolpolymerisaten. Aus der US-PS 4 255 324 sind Mischungen aus Phosphinoxiden und Phosphonaten, insbesondere cyclische Phosphonate bekannt.

In der DE-OS 3 234 033 ist eine halogenfreie thermoplastische Formmasse auf der Grundlage von Styrolpolymerisaten und Polyphenylenethern beschrieben, die mehr als 30 Gew.-% PPE enthält und mit einem Gemisch aus Phosphinoxid und einem Phosphat als Flammschutzmittel ausgerüstet ist.

Die Zielsetzung bei der Entwicklung der bekannten Formmassen war es, Formmassen zu erhalten, die auch an Testkörpern mit relativ geringen Dicken, wie z.B. an 1,6 mm Teststäben, eine kurze Brandzeit aufweisen und nicht brennend abtropfen, d.h. eine Einstufung bei dem UL-94-Brandtest der Underwriter Laboratories in die Brandklasse UL-94-V0 erreichen. Dazu ist es notwendig, einen relativ hohen Anteil an Polyphenylenether mit höheren Molekulargewichten in der Polymermischung zu wählen und eine recht hohe Menge an Flammschutzmittel zuzusetzen.

Aus der EP-A-311 909 sind halogenfreie thermoplastische Formmassen auf der Grundlage von Styrolpolymerisaten und Polyphenylenethern bekannt, die ein Flammschutzmittelsystem aus einer Phosphor enthaltenden organischen Verbindung und einem Triazinderivat enthalten. Das Verhältnis PPE zu Styrolpolymerisat liegt hier zwischen 1:4 und 3:2, wobei der Polyphenylenether übliche Molekulargewichte ab 35000 aufweist. Die mit dieser Formmasse gelöste Aufgabe war ebenfalls, eine am 1,6 mm Teststab nicht abtropfende, flammgeschützte Formmasse herzustellen. Der Zusatz von Triazinderivat war erforderlich, um das Abtropfen zu verhindern.

Der bisher notwendige hohe PPE-Gehalt, insbesondere mit höheren Molekulargewichten, bewirkt aber eine drastisch herabgesetzte Fließfähigkeit der Polymermischungen sowie eine mit steigendem Gehalt an PPE zunehmende Gelbfärbung und abnehmende UV-Beständigkeit der Formmassen. Für viele Anwendungen ist eine Einstufung der Formmasse in die Brandklasse V0 nach UL-94 nicht notwendig, und es ist ausreichend, daß die Formmasse die Klassifizierung nach UL-94 V2 besitzt, die brennendes Abtropfen der Teststäbe zuläßt. Für diese Anwendungen ist es allerdings erforderlich, daß die halogenfrei flammgeschützte Polymermischung eine möglichst hohe Fließfähigkeit besitzt. Geringe Verfärbung und gute UV-Beständigkeit der Formmassen sind wünschenswert. Zusätzlich tritt bei der Verarbeitung der Formmassen mit höheren Anteilen an PPE eine zunehmende Belagsbildung in den Spritzgußformen auf.

Der vorliegenden Erfindung lag daher die Aufgabe zugrunde, thermoplastische Formmassen auf der Grundlage von Styrolpolymerisaten und Polyphenylenethern zu schaffen, die ein zum Erreichen der Einstufung V2 bei dem UL-94-Brandtest der Underwriter Laboratories ausreichenden Brandschutz besitzen und eine möglichst hohe Fließfähigkeit aufweisen. Weiterhin soll bei der Spritzgußverarbeitung die Formbelagsbildung reduziert werden.

Demgemäß wurden die eingangs definierten thermoplastischen Formmassen gefunden.

Bevorzugte Massen dieser Art sind den Unteransprüchen zu entnehmen.

Die in Frage kommenden Polyphenylenether A sind an sich bekannt und werden vorzugsweise durch oxidative Kupplung von in o-Position disubstituierten Phenolen hergestellt (vgl. US-Patente 3 661 848, 3 378 505, 3 306 875 und 3 639 656). Als Beispiele für Substiuenten sind Halogenatome wie Chlor oder Brom und Alkyl- oder Alkoxy-Gruppen zu nennen. Die Alkyl- oder Alkoxy-Gruppen, die vorzugsweise 1 bis 4 Kohlenstoffatome, aber kein α-ständiges tertiäres Wasserstoffatom enthalten, können ihrerseits durch Chlor oder Brom substituiert sein.

Beispiele für geeignete Polyphenylenether sind

Poly-2,6-dilauryl-1,4-phenylenether,
Poly-2,6-diphenyl-1,4-phenylenether,
Poly-2,6-dimethoxi-1,4-phenylenether,
Poly-2,6-diethoxi-1,4-phenylenether,
Poly-2-methoxi-6-ethoxi-1,4-phenylenether,
Poly-2-ethyl-6-stearyloxi-1,4-phenylenether,
Poly-2,6-dichlor-1,4-phenylenether,
Poly-2-methyl-6-phenyl-1,4-phenylenether,
Poly-2,6-dibenzyl-1,4-phenylenether,
Poly-2-ethoxi-1,4-phenylenether,
Poly-2-chlor-1,4-phenylenether und
Poly-2,6-dibrom-1,4-phenylenether.

Bevorzugt werden Polyphenylenether eingesetzt, bei denen die Substituenten Alkylreste mit 1 bis 4 Kohlenstoffatomen sind, wie

Poly-2,6-dimethyl-1,4-phenylenether,
Poly-2,6-diethyl-1,4-phenylenether,
Poly-2-methyl-6-ethyl-1,4-phenylenether,
Poly-2-methyl-6-propyl-1,4-phenylenether,
Poly-2,6-dipropyl-1,4-phenylenether und
Poly-2-ethyl-6-propyl-1,4-phenylenether.

Besonders bevorzugt ist Poly-2,6-dimethyl-1,4-phenylenether

Ebenfalls geeignet sind Copolymere verschiedener Phenole, wie z.B. solche, die 2,6-Dimethylphenol und 2,3,6-Trimethylphenol enthalten. Selbstverständlich können auch Mischungen verschiedener Polyphenylenether eingesetzt werden. Auch Pfropfcopolymere aus Polyphenylenethern und Monomeren wie Styrol, α-Methyl-Styrol, Vinyltoluol oder Chlorstyrol sind möglich.

Unter Polyphenylenethern im Sinne der Erfindung sollen auch solche verstanden werden, die mit Monomeren wie Fumarsäure, Maleinsäure oder Maleinsäureanhydrid modifiziert sind. Derartige Polyphenylenether sind u.a. in der WO 87/00540 beschrieben.

Die erfindungsgemäß geeigneten Polyphenylenether weisen im allgemeinen eine Grenzviskosität von 0,21 - 0,48 dl/g auf, gemessen in 0,5 %iger Lösung in Chloroform bei 25°C. Dies entspricht einer mittleren Molmasse $\overline{M}_w$ (Gewichtsmittel) zwischen 10000 und 35000, bevorzugt 10000 bis 26000 ($\eta_{red}$ 0,21 bis 0,43 dl/g), sowie insbesondere 15000 bis 25000 ($\eta_{red}$ 0,3 bis 0,42 dl/g).

Die Molekulargewichtsverteilung und damit die Molmasse $\overline{M}_w$ wird im allgemeinen nach der GPC-Methode mit Shodex-Trennsäulen 0,8x50 cm vom Typ A803, A804 und A805 mit THF als Elutionsmittel bei Raumtemperatur bestimmt. Die PPE-Proben werden unter Druck in THF bei 110°C gelöst. Injiziert werden 0,160 ml einer 0,25 %igen Lösung. Die Detektion erfolgt mittels eines UV-Detektors. Die Eichung wurde mit PPE-Proben durchgeführt, deren absolute Molekulargewichtsverteilungen durch eine GPC-Laser-Lichtstreuungs-Kombination bestimmt worden waren.

Der Gehalt der Komponente A) in den erfindungsgemäßen Formmassen beträgt 5-94, bevorzugt 5-60, insbesondere 5-25 Gew.-% und ganz besonders 10-20 Gew.-%.

Die Komponente B) ist in den erfindungsgemäßen Formmassen in Mengen von 5 bis 94, bevorzugt 30 bis 94 und insbesondere 50 bis 86 Gew.-% enthalten, bezogen auf das Gesamtgewicht der Komponenten A) bis C) sowie gegebenenfalls D).

Die Komponente B) ist ein vinylaromatisches Polymer, das vorzugsweise mit dem eingesetzten Polyphenylenether verträglich ist.

Beispiele für bevorzugte, mit Polyphenylenethern verträgliche vinylaromatische Polymere sind der Monographie von O. Olabisi, Polymer-Polymer Miscibility, 1979, S. 224 bis 230 und 245 zu entnehmen.

Es kommen sowohl Homo- als auch Copolymerisate von vinylaromatischen Monomeren mit 8 bis 12 C-Atomen in

Betracht.

Als monovinylaromatische Verbindungen kommen dabei insbesondere Styrol in Betracht, ferner die kern- oder seitenkettenalkylierten Styrole. Als Beispiele seien Chlorstyrol, α-Methylstyrol, Styrol, p-Methylstyrol, Vinyltoluol und p-tert.-Butylstyrol genannt. Vorzugsweise wird jedoch Styrol allein verwendet.

Die Homopolymerisate werden im allgemeinen nach den bekannten Verfahren in Masse, Lösung oder Suspension hergestellt (vgl. Ullmanns Enzyklopädie der techn. Chemie, Band 19, Seiten 265 bis 272, Verlag Chemie, Weinheim 1980).

Die Homopolymerisate können Gewichtsmittel des Molekulargewichts $M_w$ von 100 bis 300 000 aufweisen, die nach üblichen Methoden bestimmt werden können.

Als Comonomere zur Herstellung von Copolymerisaten kommen z.B. (Meth)acrylsäure, (Meth)acrylsäurealkylester mit 1 bis 4 C-Atomen im Alkylrest, Acrylnitril und Maleinsäureanhydrid sowie Maleinsäureimide, Acrylamid und Methacrylamide sowie deren N,N oder N-alkylsubstituierten Derivate mit 1 bis 10 C-Atomen im Alkylrest in Frage.

Die Comonomeren sind je nach ihrer chemischen Struktur in unterschiedlichen Mengen in den Styrolpolymerisaten enthalten. Entscheidend für den Gehalt an Comonomeren im Mischpolymerisat ist die Mischbarkeit des Copolymerisates mit dem Polyphenylenether. Solche Mischungsgrenzen sind bekannt und beispielsweise in der US-P 4 360 618, 4 405 753 und in der Veröffentlichung von J.R. Fried, G.A. Hanna, Polymer Eng. Scie. Band 22 (1982) Seite 705 ff beschrieben. Die Herstellung der Copolymeren erfolgt nach bekannten Verfahren, die beispielsweise in Ullmanns Enzyklopädie der techn. Chemie, Band 19, Seite 273 ff, Verlag Chemie, Weinheim (1980) beschrieben sind. Die Copolymerisate haben im allgemeinen Gewichtsmittel des Molekulargewichtes ($M_w$) von 10 000 bis 300 000, die nach üblichen Methoden bestimmt werden können.

Bei der Komponente B handelt es sich vorzugsweise um schlagfest modifiziertes Polystyrol, dessen Kautschukgehalt im allgemeinen von 3 bis 25 Gew.-%, vorzugsweise von 5 bis 15 Gew.-% beträgt.

Die meist angewandten Verfahren zur Herstellung schlagzähmodifizierter Styrolpolymerisate sind die Polymerisation in Masse oder Lösung in Gegenwart eines Kautschuks, wie es beispielsweise in der US-Patentschrift 2 694 692 beschrieben ist, und Verfahren zur Massesuspensionspolymerisation, wie sie beispielsweise in der US-Patentschrift 2 862 906 beschrieben sind. Selbstverständlich sind auch andere Verfahren anwendbar, sofern die gewünschte Teilchengröße der Kautschukphase eingestellt wird.

Als Kautschuke werden die üblicherweise für die Schlagzähmodifizierung von Styrolpolymerisaten gebräuchlichen natürlichen oder synthetischen Kautschuke eingesetzt. Geeignete Kautschuke im Sinne der Erfindung sind neben Naturkautschuk z.B. Polybutadien, Polyisopren und Mischpolymerisate des Butadiens und/oder Isoprens mit Styrol und anderen Comonomeren, die eine Glastemperatur, bestimmt nach K.H. Illers und H. Breuer, Kolloidzeitschrift 190 (1), 16 bis 34 (1963), unter -20°C besitzen.

Es können auch Mischungen von schlagfest modifizierten und nichtmodifizierten vinylaromatischem Polymeren eingesetzt werden, wobei das Mischungsverhältnis beliebig ist.

Als Komponente C) enthalten die erfindungsgemäßen Formmassen eine Mischung aufgebaut aus

C1) mindestens einer phosphorhaltigen Verbindung,
C2) eines Triazinderivates und gegebenenfalls
C3) eines aromatischen Sulfonamids.

Die Zusammensetzung der Komponente C) beträgt im allgemeinen (bezogen auf den Gehalt der gesamten Komponente C) in den Formmassen

C1) 70 bis 95,9 und bevorzugt 80 bis 94 Gew.-%
C2) 4 bis 29,9 und bevorzugt 5 bis 19 Gew.-%
C3) 0,1 bis 10 und bevorzugt 1 bis 5 Gew.-%.

Der Gehalt der Komponente C) in den erfindungsgemäßen Formmassen beträgt 1 bis 30, vorzugsweise 1 bis 20 und insbesondere 2 bis 15 Gew.-% bezogen auf das Gesamtgewicht der Komponenten A bis C) sowie gegebenenfalls D).

Bei der Komponente C1) handelt es sich um organische phosphorhaltige Verbindungen oder deren Mischungen.

Aus der großen Zahl von phosphorhaltigen Verbindungen seien nur einige Beispiele erwähnt.

Beispiele für Phosphorverbindungen der Phosphin-Klasse sind aromatische Phosphine, wie Triphenylphosphin, Tritolylphosphin, Trinonylphosphin, Trinaphthylphosphin u.a.. Besonders geeignet ist Triphenylphosphin.

Beispiele für Phosphorverbindungen der Diphosphinklasse sind Tetraphenyldiphosphin, Tetranaphthyldiphosphin u.a.. Besonders geeignet ist Tetranaphthyldiphosphin.

Geeignete Phosphinoxide sind Triphenylphosphinoxid, Tritolylphosphinoxid. Trinonylphosphinoxid, Trinaphthylphosphinoxid. Bevorzugt ist Triphenylphosphinoxid.

Beispiele für organische Hypophosphite sind Cellulosehypophosphitester, Ester der hypophosphorigen Säuren mit Diolen, wie z.B. von 1,10-Dodecyldiol. Auch substituierte Phosphinsäuren und deren Anhydride, wie z.B. Diphenylphosphinsäure, können eingesetzt werden. Des weiteren kommen in Frage Diphenylphosphinsäure, Di-p-Tolylphosphinsäure, Di-Kresylphosphinsäureanhydrid, Es kommen aber auch Verbindungen wie Hydrochinon-, Ethylenglykol-, Propylenglykol-bis(diphenylphosphinsäure)ester u.a. in Frage. Ferner sind geeignet Aryl(Alkyl)phosphinsäureamide, wie z.B. Diphenylphosphinsäure-dimethylamid und Sulfonamidoaryl(alkyl)phosphinsäurederivate, wie z.B. p-Tolylsulfonamidodiphenylphosphinsäure. Bevorzugt eingesetzt werden Hydrochinon- und Ethylenglykol-bis-(diphenylphosphinsäure)ester und das Bisdiphenylphosphinat des Hydrochinons.

Phosphorverbindungen der Oxidationsstufe +3 leiten sich von der phosphorigen Säure ab. Geeignet sind cyclische Phosphonate, die sich vom Pentaerythrit, Neopentylglykol oder Brenzkatechin ableiten. Ferner ist Phosphor der Wertigkeitsstufe +3 in Triaryl(alkyl)phosphiten, wie z.B. Triphenylphosphit, Tris(4-decylphenyl)phosphit, Tris(2,4-di-tert.-butylphenyl)phosphit oder Phenyldidecylphosphit u.a. enthalten. Es kommen aber auch Diphosphite, wie z.B. Propylenglykol-1,2-bis(diphosphit) oder cyclische Phosphite, die sich vom Pentaerythrit, Neopentylglykol oder Brenzkatechin ableiten, in Frage.

Besonders bevorzugt werden Methylneopentylphosphonat (Methanphosphonsäuremethylester) und -phosphit sowie Dimethylpentaerythritdiphosphonat und -phosphit.

Weiter kommen Hypodiphosphate, wie z.B. Tetraphenylhypodiphosphat oder Bisneopentylhypodiphosphat in Betracht.

Beispiele für alkyl-und arylsubstituierte Phosphate sind Phenylbisdodecylphosphat, Phenylethylhydrogenphosphat, Phenyl-bis(3,5,5-trimethylhexyl)phosphat, Ethyldiphenylphosphat, 2-Ethylhexyldi(tolyl)phosphat, Diphenylhydrogenphosphat, Bis(2-ethylhexyl)-p-tolylphosphat, Tritolylphosphat, Bis(2-ethylhexyl)-phenylphosphat, Di(nonyl)phenylphosphat, Phenylmethylhydrogenphosphat, Di(dodecyl)-p-tolylphosphat, p-Tolyl-bis(2,5,5-trimethylhexyl)phosphat oder 2-Ethylhexyldiphenylphosphat. Besonders geeignet sind Phosphorverbindungen, bei denen jeder Rest ein Aryloxi-Rest ist. Ganz besonders geeignet ist Triphenylphosphat.

Des weiteren können auch cyclische Phosphate eingesetzt werden. Besonders geeignet ist hierbei Diphenylpentaerythritdiphosphat und Phenylneopentylphosphat.

Außer den oben angeführten niedermolekularen Phosphorverbindungen kommen noch oligomere und polymere Phosphorverbindungen in Frage.

Solche polymeren, halogenfreien organischen Phosphorverbindungen mit Phosphor in der Polymerkette entstehen beispielsweise bei der Herstellung von pentacyclischen, ungesättigten Phosphindihalogeniden, wie es beispielsweise in der DE-A 20 36 173 beschrieben ist. Das Molekulargewicht, gemessen durch Dampfdruckosmometrie in Dimethylformamid, der Polyphospholinoxide soll im Bereich von 500 bis 7.000, vorzugsweise im Bereich von 700 bis 2.000 liegen.

Weiterhin können solche halogenfreien polymeren Phosphorverbindungen durch die Reaktion eines Phosphonsäurechlorids, wie z.B. Phenyl-, Methyl-, Propyl-, Styryl- und Vinylphosphonsäuredichlorid mit bifunktionellen Phenolen, wie z.B. Hydrochinon, Resorcin, 2,3,5-Trimethylhydrochinon, Bisphenol-A oder Tetramethylbisphenol-A entstehen.

Weitere halogenfreie polymere Phosphorverbindungen, die in den erfindungsgemäßen Formmassen enthalten sein können, werden durch Reaktion von Phosphoroxidtrichlorid oder Phosphorsäureesterdichloriden mit einem Gemisch aus mono-, bi- und trifunktionellen Phenolen und anderen Hydroxylgruppen tragenden Verbindungen hergestellt (vgl. Houben-Weyl-Müller, Thieme-Verlag Stuttgart, Organische Phosphorverbindungen Teil II (1963)). Ferner können polymere Phosphonate durch Umesterungsreaktionen von Phosphonsäureestern mit bifunktionellen Phenolen (vgl. DE-A 29 25 208) oder durch Reaktionen von Phosphonsäureestern mit Diaminen oder Diamiden oder Hydraziden (vgl. US-PS 4 403 075) hergestellt werden. In Frage kommt aber auch das anorganische Poly(ammoniumphosphat).

Es können auch oligomere Pentaerythritphosphite, -phosphate und -phosphonate gemäß EP-B 8 486, z.B. Mobil Antiblaze® 19 (eingetragenes Warenzeichen der Firma Mobil Oil) verwendet werden.

Ganz besonders bevorzugt zum Einsatz gelangen Triphenylphosphinoxid, Triphenylphosphat, Hydrochinon-bis-(diphenylphosphinsäure)ester und Methylneopentylphosphat (Methanphosphonsäureneopentylester) sowie Mobil Antiblaze 19, wobei diese Verbindungen allein oder in beliebigen Mischungsverhältnissen zugesetzt werden können.

Die gemäß der Erfindung verwendeten Triazinderivate (Komponente C2) sind im allgemeinen Melamin sowie dessen Reaktionsprodukte mit organischen oder anorganischen Säuren.

Bevorzugt sind Melamin (Formel I) und Melamincyanurat, wobei letzteres ein Reaktionsprodukt aus vorzugsweise äquimolaren Mengen von Melamin und Cyanursäure bzw. Isocyanursäure (Formeln IIa und IIb) ist.

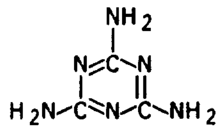

(I)

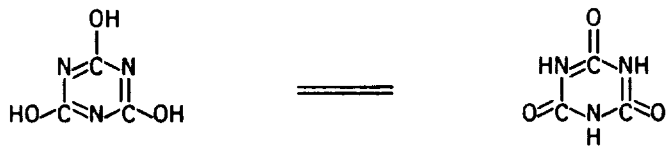

(IIa) Enolform

(IIb) Ketoform

Man erhält es z.B. durch Umsetzung von wäßrigen Lösungen der Ausgangsverbindungen bei 90 bis 100°C. Das im Handel erhältliche Produkt ist ein weißes Pulver mit einer mittleren Korngröße $d_{50}$ von 69 µm.

Darüber hinaus sind Melaminoxalat, Melaminphosphat, Melaminborat oder Melaminstearat als Komponente C2) geeignet.

Es könne auch Mischungen der o.g. Triazinderivate eingesetzt werden, wobei das Mischungsverhältnis beliebig ist.

Bevorzugte Kombination C1) und C2) sind Mischungen aus Triphenylphosphinoxid mit Melamin.

Als Komponente C3 wird ein aromatisches Sulfonamid verwendet, das einen Schmelzpunkt von über 90°C aufweist und in der Lage ist, sich im geschmolzenen Zustand mit der Polymermischung zu mischen. In Frage kommen z.B. Benzolsulfonamid und alkylsubstituierte Benzolsulfonamide wie p-Toluolsulfonamid, o-Toluolsulfonamid, N-Methyl-p-toluolsulfonamid oder N-Cyclohexyl-p-toluolsulfonamid. Bevorzugt sind Benzolsulfonamid und p-Toluolsulfonamid.

Geeignete Sulfonamide erhält man beispielsweise durch Umsetzung entsprechender Sulfonylchloride mit wäßrigem Ammoniak. N-alkylsubstituierte Sulfonamide kann man in analoger Weise aus primären Aminen erhalten.

Als Komponente D) können die erfindungsgemäßen thermoplastischen Formmassen auch übliche Zusatzstoffe und Verarbeitungshilfsmittel enthalten. Der Anteil dieser Zusätze beträgt im allgemeinen nicht mehr als 60, insbesondere nicht mehr als 50 und ganz besonders nicht mehr als 30 Gew.%, bezogen auf das Gesamtgewicht der Komponente A) bis D).

Als Zusatzstoffe seien genannt Hitze- und Lichtstabilisatoren, Gleit- und Entformungsmittel, Färbemittel, wie Farbstoffe und Pigmente in üblichen Mengen. Weitere Zusatzstoffe sind Verstärkungsmittel wie Glasfasern, Asbestfasern, Kohlenstoff-Fasern, aromatische Polyamidfasern und/oder Füllstoffe, Gipsfasern, synthetische Calciumsilikate, Kaolin, calciniertes Kaolin, Wollastonit, Talkum und Kreide.

Auch niedermolekulare oder hochmolekulare Polymere kommen als Zusatzstoffe in Betracht, wobei Polyethylenwachs als Gleitmittel besonders bevorzugt ist.

Als Zusatzstoffe seien Schlagzähmodifier genannt, die in Mengen bis zu 20 Gew.-%, bevorzugt bis zu 15 Gew.-% enthalten sein können und welche verschieden von der Komponente B) sind.

Geeignet sind übliche Kautschuke, z.B. Acrylatkautschuk und Polymerisate konjugierter Diene, wie Polybutadienkautschuk und Polyisoprenkautschuk. Die Dienpolymerisate können, in an sich bekannter Weise, teilweise oder vollständig hydriert sein. Außerdem kommen z.B. in Betracht: Acrylnitrilbutadienkautschuk, hydrierter Styrolbutadienkautschuk, Ethylen-Propylen-Dien-Kautschuk, Polybutylen- und Polyoctenamerkautschuke, Ionomere, Blockcopolymere aus vinylaromatischen Monomeren mit Dienen wie Butadien oder Isopren (an sich bekannt aus EP-A 62 282) mit dem Aufbau $M^1M^2$-, $M^1M^2M^1M^2$- oder $M^1M^2M^1$-, wobei diese Blockpolymerisate auch Segmente mit statistischer Verteilung enthalten können, sowie Stern-Block-Copolymere. Als besonders geeignet haben sich Polymerisate konjugierter Diene wie Polybutadienkautschuk oder Polyisoprenkautschuk erwiesen. Derartige synthetische Kautschuke sind dem Fachmann geläufig und zusammenfassend in "Ullmanns Encyklopädie der Technischen Chemie", 4. Auflage, Bd. 13, Seiten 595 bis 634, Verlag Chemie GmbH, Weinheim 1977, beschrieben.

Als Pigmente kommen z.B. in Frage $TiO_2$ und Ruße.

Bei Verwendung von $TiO_2$ liegt die mittlere Teilchengröße im Bereich von 50 bis 400 nm, insbesondere 150 bis 240 nm. Techn. Verwendung finden Rutile und Anatas, die gegebenenfalls mit Metalloxiden, z.B. Al-oxid, Si-Oxiden, Oxiden des Zn oder Siloxanen beschichtet sind.

Über Art und Menge dieser Zusatzstoffe lassen sich die gewünschten Eigenschaften der Endprodukte in weitem Maße steuern.

Die Herstellung der erfindungsgemäßen thermoplastischen Formmassen erfolgt zweckmäßigerweise durch Mischen der Komponenten bei Temperaturen im Bereich von 250 bis 320°C in üblichen Mischvorrichtungen, wie z.B. Knetern, Banburymischern und Einschneckenextrudern, vorzugsweise mit einem Zweischneckenextruder. Um eine möglichst homogene Formmasse zu erhalten, ist eine intensive Durchmischung notwendig. Die Reihenfolge des Mischens der Komponenten kann variiert werden, es können zwei oder gegebenenfalls drei Komponenten vorgemischt

sein oder es können auch alle Komponenten gemeinsam gemischt werden.

Die Verweilzeiten betragen im allgemeinen 0,5 bis 30 min, vorzugsweise 1 bis 5 min.

Die erfindungsgemäßen Formmassen zeichnen sich durch eine kürzere mittlere sowie einheitliche Brandzeit aus, d.h. einzelne Teststäbe zeigen keine längeren Nachbrennzeiten als 30 Sekunden, welches die Voraussetzung zur Klassifizierung nach UL 94 in die Brandklasse V2 darstellt.

Bei höheren PPE-Gehalten wird die Belagsbildung in der Spritzgußform verringert.

Die erfindungsgemäßen Formmassen eignen sich gut zur Herstellung von Formteilen aller Art, z.B. durch Spritzgruß oder Extrusion. Sie können weiterhin dienen zur Herstellung von Folien und Halbzeug im Tiefzieh- oder Blasverfahren.

Beispiele

Beispiel 1 und Vergleichsbeispiele V1, V2, V3, V4 und V5

Es wurden folgende Komponenten eingesetzt:

Komponente A

Poly-2,6-dimethyl-1,4-phenylenether mit einem mittleren Molekulargewicht $\overline{M}_w$ von 25000.

Komponente B

Schlagfestes Polystyrol mit 8 Gew.-% Polybutadien und mittlerer Teilchengröße der Weichkomponente von 2,8 µm. Die VZ der Hartmatrix beträgt 70 ml/g (0,5 %ig in Toluol bei 23°C).

Flammschutzmischung Komponente C/1

Komponente C1

Triphenylphosphinoxid.

Komponente C2

Melamin.

Komponente C3

p-Toluolsulfonamid (98 %).

Herstellung der Formmassen

Die Komponenten A) bis C) wurden auf einem Zweischneckenextruder bei einer Zylindertemperatur von 280°C gemischt. Der Schmelzstrang wurde durch ein Wasserbad geführt und granuliert. Das getrocknete Granulat wurde bei 280°C zu Normprüfkörpern gespritzt.

Die nachstehend beschriebenen, die Mischungen charakterisierenden Parameter, wurden wie folgt bestimmt:

- MVI bei 200°C mit 5 kg nach DIN 53 735;
- Vicattemperatur VST/B nach DIN 53 460;
- Flammschutzprüfung im vertikalen Brandtest nach UL-94 an 3,2 mm Teststäben nach den Vorschriften der Underwriter Laboratories zwecks Einordnung in eine der Brandklassen UL-94-V0, UL-94-V1 oder UL-94-V2. Eine Einstufung in die Brandklasse V2 erfolgt, wenn bei 10 Beflammungen von 5 Proben die mittlere Nachbrennzeit 25 Sekunden nicht überschreitet. Keine Nachbrennzeit darf länger sein als 30 Sekunden. Brennendes Abtropfen der Proben ist erlaubt. Bei Nichtbestehen der Brandprüfung nach UL-94 wird die Probe als HB eingestuft.

Die Zusammensetzungen der Formmassen und die Ergebnisse der Messungen sind der Tabelle 1 zu entnehmen.

Tabelle 1

| Beispiel<br>Vergleichsversuch | | V1 | V2 | V3 | 1 | V4 | V5 |
|---|---|---|---|---|---|---|---|
| A | Gew.-% | 17 | 17 | 17 | 17 | 20 | 20 |
| B | Gew.-% | 73 | 72 | 71,4 | 69 | 70 | 68,4 |
| (C1) | Gew.-% | 10 | 10 | 10 | 10 | 10 | 10 |
| (C2) | Gew.-% | - | 1 | 1,6 | 1 | - | 1,6 |
| (C3) | Gew.-% | - | - | - | 3 | - | - |
| MVI (5/200) | [ml/10 min] | 6,4 | 6,74 | 6,1 | 10,7 | 5,1 | 4,6 |
| Vicat | [°C] | 89 | 88 | 89 | 87 | 90 | 91 |
| Brandtest UL 94, 3,2 mm: | | | | | | | |
| mittlere Brandzeit bei 10 Beflammungen | [s] | 18 | 13,6 | 12,3 | 12,6 | 18,9 | 10,5 |
| Anzahl der Brandstäbe mit Brandzeit > 30 s | | 1 | 0 | 0 | 0 | 2 | 0 |
| Abtropfen der Brandstäbe | | ja | ja | ja | ja | ja | ja |
| Brandklasse | | HB | V2 | V2 | V2 | HB | V2 |

Aus den Beispielen der Tabelle 1 wird ersichtlich, daß durch den Zusatz von Melamin die mittleren Brandzeiten verkürzt und die Brandzeiten vereinheitlicht werden. D.h. eine Brandzeit von mehr als 30 Sekunden wird in den mit

Melamin ausgerüsteten Formmassen bei gleichem Gehalt an phosphorhaltiger Verbindung C1 nicht beobachtet.

## Patentansprüche

1. Flammgeschützte thermoplastische Formmassen, enthaltend

   A) 5-94 Gew.-% eines Polyphenylenethers mit einem mittleren Molekulargewicht $M_w$ (Gewichtsmittel) von 10000 bis 35000,

   B) 5-94 Gew.-% eines vinylaromatischen Polymeren,

   C) 1-30 Gew.-% eines Flammschutzmittels, aufgebaut aus

      C1) 70-95,9 Gew.-% mindestens einer phosphorhaltigen Verbindung,

      C2) 4-29,9 Gew.-% eines Triazinderivates und

      C3) 0,1-10 Gew.-% eines aromatischen Sulfonamids,
      wobei sich die Gewichtsangaben auf den Gesamtgehalt der Komponente C) beziehen, sowie

   D) 0-60 Gew.-% sonstiger Zusatzstoffe in wirksamen Mengen.

2. Flammgeschützte thermoplastische Formmassen nach Anspruch 1, enthaltend als Komponente A) einen Polyphenylenether mit einem mittleren Molekulargewicht $\overline{M}_w$ von 10000 bis 26000.

3. Flammgeschützte thermoplastische Formmassen nach den Ansprüchen 1 oder 2, enthaltend

   A) 5-25 Gew.-%
   B) 50-94 Gew.-% und
   C) 1-30 Gew.-%.

4. Flammgeschützte thermoplastische Formmassen nach den Ansprüchen 1 bis 3, in denen die Komponente C aus

   80 bis 94 Gew.-% C1),
   5 bis 19 Gew.-% C2) und
   1 bis 5 Gew.-% C3)

   aufgebaut ist, wobei sich die Gewichtsangaben auf den Gesamtgehalt der Komponente C) beziehen.

5. Flammgeschützte thermoplastische Formmassen nach den Ansprüchen 1 bis 4, in denen die Komponente C2) aus Melamin oder Melamincyanurat oder deren Mischungen aufgebaut ist.

6. Verwendung der flammgeschützten thermoplastischen Formmassen gemäß den Ansprüchen 1 bis 5 zur Herstellung von Formkörpern, Fasern und Folien.

7. Formkörper, erhältlich aus den flammgeschützten thermoplastischen Formmassen gemäß den Ansprüchen 1 bis 5.

## Claims

1. A flameproofed thermoplastic molding material comprising

   A) 5-94 % by weight of a polyphenylene ether having a mean molecular weight $M_w$ (weight average) of from 10,000 to 35,000,
   B) 5-94 % by weight of a vinylaromatic polymer,
   C) 1-30 % by weight of a flameproofing agent comprising

C1) 70-95.9 % by weight of at least one phosphorus-containing compound,
C2) 4-29.9 % by weight of a triazine derivative and
C3) 0.1-10 % by weight of an aromatic sulfonamide,

where the weight data are based on the total content of component C), and
D) 0-60 % by weight of other additives in effective amounts.

**2.** A flameproofed thermoplastic molding material as claimed in claim 1, wherein component A) is a polyphenylene ether having a mean molecular weight $\overline{M}_w$ of from 10,000 to 26,000.

**3.** A flameproofed thermoplastic molding material as claimed in claim 1 or 2, comprising

5-25 % by weight of A)
50-94 % by weight of B) and
1-30 % by weight of C).

**4.** A flameproofed thermoplastic molding material as claimed in any of claims 1 to 3, wherein component C) comprises

from 80 to 94 % by weight of C1),
from 5 to 19 % by weight of C2) and
from 1 to 5 % by weight of C3),

where the weight data are based on the total content of C).

**5.** A flameproofed thermoplastic molding material as claimed in any of claims 1 to 4, wherein component C2) comprises melamine or melamine cyanurate or a mixture thereof.

**6.** The use of flameproofed thermoplastic molding material as claimed in any of claims 1 to 5 for the production of moldings, fibers or films.

**7.** A molding obtainable from a flameproofed thermoplastic molding material as claimed in any of claims 1 to 5.

## Revendications

**1.** Masses à mouler thermoplastiques ignifugées, contenant

A) 5-94% en poids d'un polyphénylèneéther ayant un poids moléculaire moyen $\overline{M}_w$ (moyenne en poids) de 10 000 à 35 000,
B) 5-94% en poids d'un polymère vinylaromatique,
C) 1-30% en poids d'un agent ignifugeant, composé de

$C_1$) 70-95,9% en poids d'un composé contenant du phosphore,
$C_2$) 4-29,9% en poids d'un dérivé de triazine et
$C_3$) 0,1-10% en poids d'un sulfonamide aromatique,
les indications de poids se rapportant à la quantité totale du composant C), ainsi que

D) 0-60% en poids d'autres additifs en quantités efficaces.

**2.** Masses à mouler thermoplastiques ignifugées selon la revendication 1 contenant, en tant que composant A), un polyphénylèneéther ayant un poids moléculaire moyen $\overline{M}_w$ de 10 000 à 26 000.

**3.** Masses à mouler thermoplastiques ignifugées selon la revendication 1 ou 2, contenant

A) à raison de 5-25% en poids,
B) à raison de 50-94% en poids et
C) à raison de 1-30% en poids.

**4.** Masses à mouler thermoplastiques ignifugées selon l'une quelconque des revendications 1 à 3, dans lesquelles le composant C) est formé de

80 à 94% en poids de C1),
5 à 19% en poids de C2) et
1 à 5% en poids de C3),

les indications de poids se rapportant à la quantité totale du composant C).

**5.** Masses à mouler thermoplastiques ignifugées selon l'une quelconque des revendications 1 à 4, dans lesquelles le composant C2) est composé de mélamine, de cyanurate de mélamine ou de mélanges de ceux-ci.

**6.** Utilisation des masses à mouler thermoplastiques ignifugées selon l'une quelconque des revendications 1 à 5 pour la fabrication de corps moulés, de fibres et de feuilles.

**7.** Corps moulés, obtenus à partir des masses à mouler thermoplastiques ignifugées selon l'une quelconque des revendications 1 à 5.